# EUROPÄISCHE PATENTSCHRIFT

(11) **EP 3 391 641 B1**
(45) Veröffentlichungstag und Bekanntmachung des Hinweises auf die Patenterteilung: **22.07.2020**
(21) Anmeldenummer: 16822633.0
(22) Anmeldetag: 15.12.2016
(51) Int. Cl.: H04N 5/232, H04N 5/225, G06F 3/01

(54) **HANDSCHUH-ARTIGE VORRICHTUNG MIT ERGONOMISCH VORTEILHAFT AUSLÖSBARER INTEGRIERTER KAMERA**
GLOVE-LIKE DEVICE WITH ERGONOMICALLY ADVANTAGEOUSLY ACTIVATABLE CAMERA INTEGRATED THEREIN
DISPOSITIF EN FORME DE GANT À CAMÉRA INTÉGRÉE DE PRÉFÉRENCE À DÉCLENCHEMENT ERGONOMIQUE

(30) Priorität: 18.12.2015 DE 102015122281
(43) Veröffentlichungstag der Anmeldung: 24.10.2018
(73) Patentinhaber: Schannath, Christina, 82541 Münsing (DE)
(72) Erfinder: Schannath, Christina, 82541 Münsing (DE)
(74) Vertreter: Qip Patentanwälte Dr. Kuehn & Partner mbB
(86) Internationale Anmeldenummer: PCT/EP2016/081144
(87) Internationale Veröffentlichungsnummer: WO 2017/102922

(56) Entgegenhaltungen:
- EP-A1- 2 720 444
- US-A1- 2012 274 546
- US-A1- 2015 237 181
- John Weir: "Hand-Tech Camera Glove Shows Off the Future of Wearable Tech | Wearable Tech | CrunchWear", , 14. August 2013 (2013-08-14), XP055351584, Gefunden im Internet: URL:http://crunchwear.com/hand-tech-camera -glove-shows-off-the-future-of-wearable-te ch/ [gefunden am 2017-03-03]

## Beschreibung

### GEBIET DER ERFINGUNG

Die vorliegende Erfindung betrifft eine Handschuh-artige Vorrichtung mit einer integrierten Kamera.

### TECHNISCHER HINTERGRUND

Kameras, mit denen einzelne Bilder oder auch ganze Bildfolgen aufgenommen werden können, existieren heutzutage nicht nur als ausschließlich für diesen Zweck konzipierte Geräte wie beispielsweise Fotoapparate oder Filmkameras, sondern werden zunehmend auch in andere Gerätschaften, die hauptsächlich zur Implementierung sonstiger Funktionalitäten konzipiert wurden, integriert. Eine inzwischen mögliche Miniaturisierung von Kameras lässt beispielsweise zu, dass Kameras in Mobiltelefonen, tragbaren Computern und anderen elektronischen Geräten integriert werden können. Meist besitzt ein Anwender heutzutage bereits mehrere mit Kamerafunktionen ausgestattete Geräte, wobei beispielsweise situationsabhängig entschieden werden kann, welches Gerät zur Aufnahme eines Bildes genutzt wird.

Oft führen Anwender ohnehin beispielsweise ein Mobiltelefon mit sich und nutzen dessen Kamerafunktion, um Bilder aufzunehmen. Allerdings wurde beobachtet, dass zum Beispiel während bestimmter Aktivitäten, beispielsweise bei sportlichen Aktivitäten, ein Herausnehmen eines Mobiltelefons, beispielsweise aus einer Tasche oder einem Rucksack, ein eventuell nötiges Entsperren des Mobiltelefons, ein Auswählen einer Kamerafunktion an dem Mobiltelefon und anschließend ein Auslösen der Kamerafunktion zur Aufnahme des Bildes von einem Anwender als umständlich und aufwendig wahrgenommen werden. Die US 2015/0237181 A1 zeigt einen Handschuh mit benutzerinteraktiven elektronischen Komponenten, bei dem ein Kamerateil auf einer Fingeraufnahme an der Spitze oder am Ende des Zeigefingers angeordnet ist. Es wird beschrieben, dass Bilder aufgenommen werden können, indem man mit dem Zeigefinger des Handschuhs und damit der Kamera auf eine Szene zeigt.

Die Internetveröffentlichung von J. Weir mit dem Titel "Hand-Tech Camera Glove Shows Off the Future of Wearable Tech | Wearable Tech | CrunchWear",, 14. August 2013, XP055351584 zeigt einen Handschuh mit einer Kamera, die an einem oberen Teil der Handfläche, d.h. in einem Bereich nahe den Fingern, angeordnet ist.

### ZUSAMMENFASSUNG DER ERFINDUNG UND VORTEILHAFTER AUSFÜHRUNGSFORMEN

Es kann daher ein Bedürfnis an einer alternativen Möglichkeit zur einfachen und schnellen Aufnahme von Bildern oder Bildfolgen bestehen. Insbesondere kann ein Bedürfnis an einer Vorrichtung bestehen, mithilfe derer in bestimmten Situationen, beispielsweise insbesondere bei sportlichen Aktivitäten wie Skilanglauf, Abfahrtsski, Radfahren, Joggen, Surfen etc., ohne großen Aufwand und insbesondere vorzugsweise ohne die Aktivität erheblich unterbrechen zu müssen, Bilder oder Bildfolgen aufgenommen werden können. Insbesondere sollte eine solche Vorrichtung einfach und ergonomisch zu betätigen sein.

Derartigen Bedürfnissen kann mit dem Gegenstand des unabhängigen Anspruchs der vorliegenden Patentanmeldung entsprochen werden. Vorteilhafte Ausführungsformen der Erfindung sind in den abhängigen Ansprüchen sowie der nachfolgenden Beschreibung definiert.

Gemäß einem Aspekt der vorliegenden Erfindung wird eine Handschuh-artige Vorrichtung beschrieben, welche eine Trägerstruktur, eine Kamera und eine Schaltanordnung aufweist. Die Kamera ist dabei dazu ausgebildet, bei Empfangen eines Kontaktsignals ein Bild oder eine Bildfolge aufzunehmen. Die Trägerstruktur ist dazu ausgebildet ist, sich ohne weitere Vorkehrungen derart an einer Hand und/oder einem Handgelenk eines Nutzers befestigen zu lassen, dass in einem über die Hand gezogenen Zustand zumindest Teile der Trägerstruktur die Hand des Nutzers umgeben. Die Kamera und die Schaltanordnung sind an der Trägerstruktur befestigt. Dabei weist die Schaltanordnung eine zu betätigende Komponente auf, die derart angeordnet und ausgelegt ist, dass sie durch eine Betätigungsbewegung eines Daumens des Nutzers hin zu einem Finger der gleichen Hand und/oder hin zu einem Fingergelenk der gleichen Hand betätigt wird und dabei das Kontaktsignal auslöst und dieses an die Kamera weiterleitet.

Mögliche Merkmale und Vorteile von Ausführungsformen der Erfindung können unter anderem und ohne die Erfindung einzuschränken als auf den nachfolgend beschriebenen Erkenntnissen und Ideen beruhend angesehen werden.

Ausgehend von den eingangs genannten Bedürfnissen wurde erkannt, dass Anwender in vielen Situationen, insbesondere bei verschiedenen sportlichen Aktivitäten, Handschuhe tragen oder zumindest problemlos Handschuh-artige Vorrichtungen tragen könnten.

Beispielsweise ist es bei Aktivitäten, die bei tiefen Temperaturen durchgeführt werden, wie beispielsweise Skifahren, Radfahren oder Joggen im Winter, etc., üblich, dass ein Anwender Handschuhe trägt, um sich vor der Kälte zu schützen. Bei anderen Aktivitäten kann es üblich sein, Handschuhe zu tragen, um Hände beispielsweise vor Verletzungen zu schützen. Insbesondere in solchen Situationen, in denen ein Anwender Handschuhe trägt, wurde es bisher als umständlich empfunden, Bilder beispielsweise mithilfe eines separat zur Verfügung stehenden Gerätes wie beispielsweise einem Fotoapparat oder einem mit Fotofunktion ausgestatteten Mobiltelefon aufzunehmen, da hierfür regelmäßig zunächst die Handschuhe ausgezogen werden mussten, um dann das separate Gerät geeignet handhaben zu können.

Es wird daher vorgeschlagen, eine Handschuh-artige Vorrichtung bereitzustellen, die statt oder ergänzend zu einem zum Beispiel vor Kälte oder Verletzungen schützenden Handschuhs von einem Anwender an der Hand getragen werden kann und diese Handschuh-artige Vorrichtung mit einer einfach und ergonomisch vorteilhaft handhabbaren Kamerafunktion auszustatten.

Die Handschuh-artige Vorrichtung kann mit einer hierin als Trägerstruktur bezeichneten Struktur vorgesehen sein, die selbst als eine Art Handschuh ausgestaltet sein kann, wobei sie in einer solchen Ausgestaltung über die Hand des Anwenders gezogen werden und zumindest Teile der Hand einschließlich der Handfläche, des Handrückens und einiger oder aller Finger teilweise oder vollständig bedecken kann. In einer solchen Ausgestaltung kann die Trägerstruktur der Handschuh-artigen Vorrichtung Teile oder die Gesamtheit der Hand des Nutzers umgeben und dabei mit einer Innenseite direkt in Kontakt mit der Hand des Nutzers kommen.

Alternativ kann die Handschuh-artige Vorrichtung auch dazu ausgestaltet sein, mit ihrer Trägerstruktur über einen Handschuh übergezogen zu werden, so dass sie zwar ebenfalls Teile oder die Gesamtheit der Hand des Nutzers umgibt, allerdings mit ihrer Innenseite nicht direkt mit der Hand, sondern mit einer Oberfläche des Handschuhs in Kontakt steht. Die Handschuh-artige Vorrichtung kann dabei an der gesamten Hand befestigt sein, beispielsweise indem sie mit ihrer Trägerstruktur die Hand und/oder Finger der Hand umgibt. Alternativ oder ergänzend kann die Handschuh-artige Vorrichtung an einem Handgelenk des Nutzers befestigt sein, beispielsweise ähnlich einer Bandage, wobei sie die Hand selbst in diesem Fall nicht vollständig umgeben braucht.

Die Handschuh-artige Vorrichtung kann mit einer Kamerafunktion ausgestattet werden, indem eine Kamera an deren Trägerstruktur befestigt bzw. in diese integriert wird. Die Kamera wird somit als Teil der Handschuh-artigen Vorrichtung von einem Nutzer automatisch mitgeführt, wenn dieser die Handschuh-artige Vorrichtung über seine Hand zieht, um diese beispielsweise gegen Kälte oder Verletzungen zu schützen.

Dabei kann positiv genutzt werden, dass Kamerafunktionen heutzutage mithilfe von miniaturisierten Kameras beispielsweise in Form von mit einer miniaturisierten Optik versehenen lichtempfindlichen Mikrochips implementiert werden können und eine solche Implementierung einfach, mit geringem Gewicht, robust und mit geringen Kosten umgesetzt werden kann. Beispielsweise kann eine Kamera als CCD-Chip (Charge Coupled Device) oder CMOS-Chip (Complementary Metal-Oxide Semiconductor) als miniaturisiertes Halbleiterbauelement implementiert werden. Eine derart in die Handschuh-artige Vorrichtung integrierte Kamera kann dazu in der Lage sein, einzelne wenigstens zweidimensionale Bilder oder eine Bildfolge, beispielsweise in Form eines Videofilms, aufzunehmen.

Um die auf diese Weise implementierte Kamerafunktion für einen Nutzer der Handschuh-artigen Vorrichtung besonders einfach nutzbar zu machen, wird eine ergonomisch einfach handzuhabende Schaltanordnung für die Handschuh-artige Vorrichtung vorgeschlagen. Die Schaltanordnung ist dabei ebenso wie die Kamera an der Trägerstruktur befestigt und bildet somit einen integralen Bestandteil der Handschuh-artigen Vorrichtung. Dabei soll die Schaltanordnung eine zu betätigende Komponente aufweisen, die derart an der Trägerstruktur angeordnet ist und derart ausgelegt ist, dass der Nutzer sie durch eine Betätigungsbewegung, vorzugsweise lediglich eine einzige Betätigungsbewegung, bei der er seinen Daumen hin zu einem Finger der gleichen Hand oder einem Fingergelenk der gleichen Hand bewegt, betätigen kann und die zu betätigende Komponente dabei das Kontaktsignal auslöst, aufgrund dessen dann die Kamera ausgelöst wird und ein Bild oder eine Bildfolge aufnimmt.

Es wurde erkannt, dass eine solche Betätigungsbewegung von einem Nutzer der Handschuh-artigen Vorrichtung besonders einfach und ergonomisch durchgeführt werden kann, so dass er mithilfe der Handschuh-artigen Vorrichtung in intuitiver Weise deren Kamerafunktion nutzen kann, um schnell und ohne erheblichen Aufwand Bilder oder Bildfolgen schießen zu können.

Beispielsweise kann ein die Handschuh-artige Vorrichtung tragender Skifahrer, Radfahrer oder Jogger lediglich seine Hand und damit die Handschuh-artige Vorrichtung derart positionieren, dass die integrierte Kamera auf ein ihn interessierendes Objekt gerichtet ist und dann mithilfe der einfachen Betätigungsbewegung das Aufnehmen des Bildes bzw. der Bildfolge auslösen. Es muss hierzu weder ein separates Gerät beispielsweise aus einer Tasche herausgenommen werden, noch muss der Nutzer seinen Handschuh ausziehen. Stattdessen kann der Nutzer mit einer einfachen und für ihn ergonomisch intuitiven Bewegung über die geeignet ausgestaltete Schaltanordnung das Aufnehmen eines Bilds bzw. einer Bildfolge mithilfe der in die Handschuh-artige Vorrichtung integrierten Kamera auslösen.

In einer einfachen Ausgestaltung kann die Schaltanordnung dabei beispielsweise über einen Druckschalter oder Drucktaster verfügen, der durch die Betätigungsbewegung des Daumens des Nutzers niedergepresst werden kann und dabei das Kontaktsignal auslöst, indem beispielsweise ein elektrischer Schaltkreis geschlossen wird.

Alternativ oder ergänzend kann die Schaltanordnung auch mit anderen technischen Ausgestaltungen implementiert werden, die ein Erkennen der Betätigungsbewegung des Daumens des Nutzers ermöglichen. Beispielsweise kann eine Schaltanordnung eine durch Annähern des Daumens bewirkte Änderung einer elektrischen Kapazität und/oder einer elektrischen Induktivität und/oder eines magnetischen Feldes erkennen und daraufhin das Kontaktsignal auslösen. Auch optische Sensoren sind als Teil einer Schaltanordnung vorstellbar.

Einer zweckdienlichen Ausgestaltung der Schaltanordnung kann dabei bei der vorgestellten Handschuh-artigen Vorrichtung eine besondere Bedeutung zukommen. Einerseits soll die Schaltanordnung derart ausgestaltet sein, dass sie einfach und ergonomisch mithilfe der Betätigungsbewegung betätigt werden kann. Andererseits sollten Fehlbetätigungen möglichst vermieden werden.

Beispielsweise sollte die Schaltanordnung möglichst derart ausgestaltet sein, dass nicht versehentlich, beispielsweise durch ein Kontaktieren der zu betätigenden Komponente durch einen anderen Gegenstand als den Daumen des Nutzers, Kontaktsignale ausgelöst werden.

Beispielsweise sollte bei einem Einsatz als Skihandschuh allein ein Umgreifen eines Skistocks nicht bereits versehentlich als Betätigungsbewegung interpretiert werden und daraufhin ein Kontaktsignal ausgelöst werden.

Dementsprechend sollte vorteilhafterweise die Schaltanordnung derart mechanisch, elektrisch und/oder in anderer physikalischer Weise ausgestaltet sein, um nur durch tatsächliche Betätigungsbewegungen durch den Daumen des Nutzers ausgelöst zu werden, nicht jedoch aufgrund anderer Ereignisse.

Beispielsweise kann die Schaltanordnung mit einem Schalter und/oder Taster ausgestattet sein, der mit einer bestimmten Mindestbetätigungskraft betätigt werden muss, um das Kontaktsignal auszulösen. Alternativ oder ergänzend kann ein Schalter oder Taster von einem beispielsweise ringartigen Vorsprung umgeben sein, so dass große Gegenstände nicht an den Schalter bzw. Taster gelangen und diesen somit nicht betätigen können, der Daumen des Nutzers jedoch aufgrund seiner rundlichen Kontur bzw. aufgrund seiner elastischen Oberfläche durchaus den Schalter bzw. Taster betätigen kann.

Gemäß einer Ausführungsform kann die Schaltanordnung eine Sicherungskomponente aufweisen, welche in einem gesicherten Zustand das Auslösen des Kontaktsignals verhindert und welche in einen ungesicherten Zustand überführt werden kann, um das Auslösen des Kontaktsignals durch die Betätigungsbewegung zuzulassen.

Mit anderen Worten kann die Schaltanordnung derart ausgestaltet sein, dass nicht stets allein durch die Betätigungsbewegung des Daumens des Nutzers das Kontaktsignal ausgelöst werden kann, sondern stattdessen gegebenenfalls zuvor die Sicherungskomponente entsichert werden muss. Auf diese Weise kann die Schaltanordnung gegen unbeabsichtigtes Betätigen geschützt werden.

Die Sicherungskomponente kann im gesicherten Zustand dabei das Auslösen des Kontaktsignals auf verschiedene Weise verhindern. Beispielsweise kann verhindert werden, dass überhaupt eine mechanische Betätigung der Schaltanordnung erfolgt, beispielsweise indem ein Druckschalter/Drucktaster gegen Niederdrücken mechanisch gesichert wird. Alternativ kann die Sicherungskomponente verhindern, dass bei einer solchen mechanischen Betätigung ein Kontaktsignal ausgelöst wird, indem beispielsweise ein Signalpfad wie beispielsweise eine zur Signalübertragung eingesetzte elektrische Leitung unterbrochen wird.

Möchte der Nutzer tatsächlich ein Bild aufnehmen, muss er die Sicherungskomponente zunächst in ihren ungesicherten Zustand überführen, um dann durch die Betätigungsbewegung das Kontaktsignal auslösen zu können. Die Sicherungskomponente kann dabei derart ausgestaltet sein, dass das Überführen in den ungesicherten Zustand in anderer Weise, beispielsweise durch eine andere Bewegung, zu erfolgen hat, als das Auslösen des Kontaktsignals durch die Betätigungsbewegung. Beispielsweise ist vorstellbar, die Sicherungskomponente durch eine Schiebebewegung zu entsichern, wohingegen ein Auslösen des Kontaktsignals durch eine als Druckbewegung dienende Betätigungsbewegung zu erfolgen hat, so dass die beiden Bewegungen in unterschiedlichen Richtungen zu erfolgen haben. Hierdurch kann die Wahrscheinlichkeit eines versehentlichen Auslösens des Kontaktsignals reduziert werden.

Alternativ oder ergänzend könnte an der Handschuh-artigen Vorrichtung beispielsweise ein weiterer Schalter vorgesehen sein, der als Sicherungskomponente das Auslösen des Kontaktsignals verhindern kann und der beabstandet zu dem durch die Betätigungsbewegung zu betätigenden Bereich der Schaltanordnung angeordnet ist. Ein Aufnehmen eines Bildes ist in diesem Fall erst möglich, wenn der Nutzer vor oder gleichzeitig mit seiner Betätigungsbewegung auch die Sicherungskomponente an anderer Stelle an der Handschuh-artigen Vorrichtung betätigt und in ihren ungesicherten Zustand überführt.

Als weitere alternative Ausgestaltung einer Sicherungskomponente kann beispielsweise vorgesehen sein, die Betätigung der Schaltanordnung permanent zu überwachen und ein beabsichtigtes von einem unbeabsichtigten Betätigen dadurch zu unterscheiden, dass eine tatsächliche Betätigungsbewegung mit einem gewissen zeitlichen Muster erfolgen muss. Beispielsweise kann die Sicherungskomponente derart ausgestaltet sein, dass ein Auslösen des Kontaktsignals lediglich dann erfolgt, wenn die Schaltanordnung mehrmals kurz hintereinander durch Betätigungsbewegungen betätigt wurde oder, alternativ, wenn die Schaltanordnung ein- oder mehrmalig ungewöhnlich lange betätigt wurde, beispielsweise wenigstens 1s oder wenigstens 3s.

Als weitere Alternative wäre eine Sicherung und/oder Entsicherung mittels Spracherkennung vorstellbar. Ein Anwender kann in diesem Fall beispielsweise über ein in die Handschuh-artige Vorrichtung integriertes Mikrofon Befehle wie z.B. "an" oder "aus" eingeben und damit veranlassen, dass die Handschuh-artige Vorrichtung entsichert und damit "scharf" gestellt wird, um anschließend über einfache Daumenbewegungen ein Aufnehmen von Bilden auslösen zu können.

Gemäß einer Ausführungsform kann die Schaltanordnung zusätzlich zu der zu betätigenden Komponente eine spezielle Betätigungskomponente aufweisen und dazu ausgelegt sein, das Kontaktsignal ausschließlich dann zu erzeugen, wenn die Betätigungskomponente mit der zu betätigenden Komponente in mechanischen Kontakt gebracht wird.

Mit anderen Worten kann vorgesehen sein, dass die zu betätigende Komponente nicht mit jedem beliebigen Gegenstand, der mit ihr in Kontakt kommt, betätigt werden kann. Stattdessen kann die Schaltanordnung derart ausgestaltet sein, dass die zu betätigende Komponente ausschließlich mit der speziell vorzusehenden Betätigungskomponente betätigt werden kann. Auch auf diese Weise können Fehlauslösungen von Kontaktsignalen verhindert werden.

Beispielsweise kann die zu betätigende Komponente eine Art Reed-Kontakt sein, welcher magnetisch betätigt werden kann. Als Betätigungskomponente kann dann ein kleiner Magnet vorgesehen sein. Die Betätigungskomponente kann an geeigneter Stelle an der Trägerstruktur vorgesehen sein, insbesondere dort, wo sie im angezogenen Zustand der Handschuh-artigen Vorrichtung an den Daumen des Nutzers grenzt und somit bei der Betätigungsbewegung mit dem Daumen bewegt werden kann. Wenn der Magnet in die Nähe oder vorzugsweise in mechanischen Kontakt mit dem Reed-Kontakt gebracht wird, wird dieser geschlossen und löst das Kontaktsignal aus. Wenn jedoch andere Gegenstände, die aus nicht-magnetischem Material bestehen, wie beispielsweise ein Skistock, mit der zu betätigenden Komponente in Kontakt kommen, führt dies nicht zu einem Auslösen des Kontaktsignals. Nur durch den mechanischen Kontakt zwischen der Betätigungskomponente und der zu betätigenden Komponente kann beispielsweise ein Schaltzustand eines Schaltkreises geändert werden und dadurch das Kontaktsignal ausgelöst werden.

Gemäß einer Ausführungsform ist die zu betätigende Komponente der Schaltanordnung an der Trägerstruktur an einer Stelle angebracht, welche in dem über die Hand gezogenen Zustand an einer dem Daumen gegenüberliegenden Seite des Zeigefingers und/oder des Zeigefingergelenks liegt.

Mit anderen Worten wurde es als vorteilhaft erkannt, die durch die Betätigungsbewegung von dem Nutzer zu betätigende Komponente an einer solchen Position an der Trägerstruktur der Handschuh-artigen Vorrichtung anzubringen, dass sie, wenn die Handschuh-artige Vorrichtung über die Hand des Nutzers gezogen ist, an einer Seite des Zeigefingers bzw. des Zeigefingergelenks liegt und somit einfach und ergonomisch intuitiv von dem Daumen des Nutzers betätigt werden kann.

Gemäß einer Ausführungsform kann die Kamera an der Trägerstruktur an einer Stelle angebracht sein, welche in dem über die Hand gezogenen Zustand an dem Handballen und/oder an dem Handgelenk, insbesondere an der Handgelenksunterseite, liegt.

Mit anderen Worten wurde erkannt, dass es für eine ergonomische und intuitive Handhabung der Handschuh-artigen Vorrichtung vorteilhaft sein kann, die an der Trägerstruktur angebrachte Kamera an einer Stelle vorzusehen, die der Nutzer zum Aufnehmen eines Bildes intuitiv hin zu dem aufzunehmenden Objekt richten kann, ohne die Kamera jedoch vorzugsweise in einem Bereich wie beispielsweise den Fingern oder einer Handinnenfläche anzuordnen, der bei gewöhnlicher Verwendung eines Handschuhs häufig starken mechanischen Belastungen und/oder Deformationen ausgesetzt ist.

Gemäß einer Ausführungsform ist zumindest die Schaltanordnung und/oder die Kamera wasserdicht verkapselt. Vorzugsweise sind auch andere Komponenten der Handschuh-artigen Vorrichtung wie insbesondere eine Optik der Kamera, eine Steuerungselektronik, elektrische Anschlüsse, etc. wasserdicht verkapselt. Empfindliche Komponenten der Handschuh-artigen Vorrichtung können somit gegen eine Schädigung durch eindringendes Wasser geschützt werden. Dies kann insbesondere bei einer Verwendung der Handschuh-artigen Vorrichtung in feuchter Umgebung wie beispielsweise im Freien bei Regen oder Schnee die empfindlichen elektrischen Komponenten schützen.

Eine wasserdichte Verkapselung kann dabei in verschiedener Weise erfolgen. Beispielsweise können die Komponenten in eigenen hermetisch abgedichteten Gehäusen aufgenommen sein. Alternativ können die Komponenten durch wasserdichte Schichten, beispielsweise in Form wasserdichter Membranen oder Folien, umgeben sein. Als weitere Alternative können die Komponenten in eine dichtende Masse eingegossen sein.

Gemäß einer Ausführungsform ist die Schaltanordnung ferner mit einer Anti-Prell-Anordnung ausgestattet, welche eine Erzeugung mehrerer Schaltsignale durch eine einzelne Betätigungsbewegung unterdrückt.

Mit anderen Worten können an der Schaltanordnung Vorkehrungen getroffen sein, mithilfe derer verhindert werden kann, dass ein einzelnes gezieltes Betätigen der Schaltanordnung durch eine einzelne Betätigungsbewegung versehentlich zu einem Auslösen mehrerer Schaltsignale und somit versehentlich zu einem Aufnehmen mehrerer Bilder führt.

Gemäß einer Ausführungsform ist die Trägerstruktur aus einem zwar flexiblen, aber im Wesentlichen nicht elastisch dehnbaren Material ausgebildet.

Mit anderen Worten kann die Trägerstruktur zwar flexibel gebogen oder auch geknickt werden, das Material der Trägerstruktur soll sich jedoch allenfalls unwesentlich, das heißt beispielsweise um weniger als 20% oder weniger als 10% seiner Breite und/oder Länge, vorzugsweise weniger als 2% seiner Breite bzw. Länge, elastisch dehnen lassen. Als Materialien lassen sich beispielsweise verschiedene Textilien und/oder Folien und/oder Verbundmaterialien einsetzen. Die Trägerstruktur kann dabei, ähnlich wie bei einem gewöhnlichen Handschuh, aus mehreren Materiallagen aufgebaut sein wie beispielsweise einer außen liegenden mechanisch widerstandsfähigen Lage, einer innen liegenden thermisch isolierenden Lage und eventuell einer zwischen diesen beiden Lagen aufgenommenen wasserdichten und vorzugsweise atmungsaktiven Lage. An der Trägerstruktur bzw. in die Trägerstruktur integriert können dann die Komponenten wie beispielsweise die Schaltanordnung und die Kamera angebracht werden und dabei mechanisch stabilisiert und/oder vor Umwelteinflüssen geschützt aufgenommen werden.

Gemäß einer Ausführungsform weist die Handschuh-artige Vorrichtung ferner ein Display auf, welches an der Trägerstruktur angebracht ist und dazu ausgelegt ist, von der Kamera aufgenommene Bilder darzustellen. Das Display kann insbesondere vorteilhaft als flexibles Display ausgestaltet sein.

Mit anderen Worten kann die Handschuh-artige Vorrichtung mithilfe ihrer Kamera nicht nur Bilder aufnehmen, sondern es kann zusätzlich vorgesehen sein, diese Bilder auch mithilfe eines ebenfalls an der Trägerstruktur der Handschuh-artigen Vorrichtung angebrachten Displays auch direkt darstellen zu können. Da das Display im Vergleich zu der Kamera oder der Schaltanordnung wesentlich größer sein sollte, um Bilder für den Nutzer erkennbar darstellen zu können, kann es vorteilhaft sein, statt eines starren Displays, wie es beispielsweise bei Mobiltelefonen eingesetzt wird, ein flexibles Display vorzusehen, welches beispielsweise in engen Biegungsradien von weniger als 10 cm, vorzugsweise weniger als 5 cm und gar weniger als 1 cm, gebogen werden kann, ohne irreversiblen Schaden zu nehmen. Ein solches flexibles Display kann einfach an der Trägerstruktur der Handschuh-artigen Vorrichtung vorgesehen werden, ohne beispielsweise eine Beweglichkeit der Hand des die Vorrichtung tragenden Nutzers einzuschränken oder bei Bewegungen der Handschuh-artigen Vorrichtung selbst Schaden zu nehmen.

Gemäß einer Ausführungsform ist das Display an der Trägerstruktur an einer Stelle angebracht, welche in dem über die Hand gezogenen Zustand an dem Handrücken und/oder dem Handgelenk, bei Letzterem insbesondere an der Handgelenksoberseite, liegt. An einer solchen Stelle angebracht ist das Display von dem Nutzer einfach sichtbar. Insbesondere kann der Nutzer in ergonomischer und intuitiver Weise beispielsweise die an einer Handgelenksunterseite oder an einem Handballen angeordnete Kamera mit seiner Hand hin zu einem vor ihm liegenden Objekt ausrichten und dabei mittels des an beispielsweise dem Handrücken angebrachten Displays ein von der Kamera aufgenommenes Bild beobachten.

Es wird darauf hingewiesen, dass ein Fachmann erkennen wird, dass die zuvor im Zusammenhang mit Ausführungsformen der Erfindung beschriebenen Merkmale untereinander in geeigneter Weise ausgetauscht beziehungsweise kombiniert werden können und modifiziert oder ergänzt werden können, um auf diese Weise zu weiteren Ausführungsformen der Erfindung und möglicherweise Synergieeffekten zu gelangen.

### KURZE BESCHREIBUNG DER ZEICHNUNGEN

Weitere Merkmale und Vorteile der vorliegenden Erfindung werden einem Fachmann aus der nachfolgenden Beschreibung von beispielhaften Ausführungsformen und unter Bezugnahme auf die begleitenden Zeichnungen ersichtlich, wobei weder die Beschreibung noch die Zeichnungen als die Erfindung einschränkend auszulegen sind.
Fig. 1 zeigt eine Handschuh-artige Vorrichtung gemäß einer Ausführungsform der vorliegenden Erfindung.
Fig. 2 und Fig. 3 zeigen eine Draufsicht von unten und von oben auf eine Handschuh-artige Vorrichtung gemäß einer alternativen Ausführungsform der vorliegenden Erfindung.
Fig. 4 zeigt Komponenten einer erfindungsgemäßen Handschuh-artigen Vorrichtung und deren Verschaltung.

Die in den Figuren dargestellten Details sind jeweils nur schematisch veranschaulicht und nicht maßstabsgetreu wiedergegeben. Gleiche Bezugszeichen geben in den Figuren gleiche oder gleichwirkende Merkmale an.

### DETAILLIERTE BESCHREIBUNG VON BEVORZUGTEN AUSFÜHRUNGSFORMEN

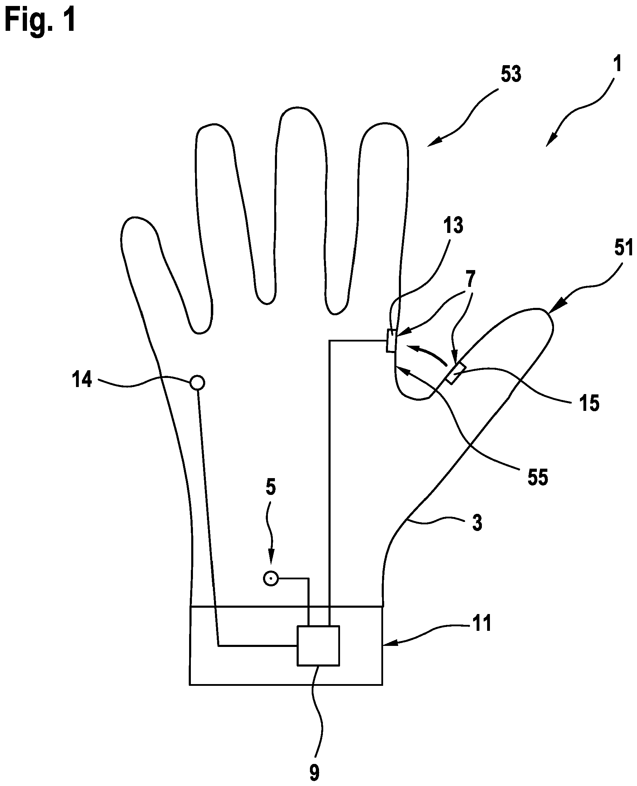

Fig. 1 zeigt eine Handschuh-artige Vorrichtung 1 in Form eines Handschuhs, wie er über eine Hand eines Nutzers gezogen werden kann. Die Handschuh-artige Vorrichtung 1 weist eine Trägerstruktur 3 auf. Diese Trägerstruktur 3 entspricht im Wesentlichen einem herkömmlichen Handschuh in Form und Funktion. Die Trägerstruktur 3 ist aus einer oder mehreren Textilmateriallagen aufgebaut, die flexibel, aber im Wesentlichen nicht elastisch dehnbar sind.

Um der Handschuh-artigen Vorrichtung 1 eine Kamerafunktion zu verleihen, ist an der Trägerstruktur 3 eine Kamera 5 angebracht. Die Kamera 5 ist vorzugsweise derart miniaturisiert, dass ihre Fläche lediglich einen geringfügigen Teilbereich der Oberfläche der Trägerstruktur 3 bedeckt, beispielsweise weniger als 2cm². Beispielsweise kann die Kamera 5 ähnlich aufgebaut sein wie in Mobiltelefonen aufgenommene Kameras. Insbesondere kann die Kamera 5 einen zweidimensionalen Bildsensor, beispielsweise in Form eines CCD-Chips oder eines CMOS-Chips, aufweisen. Ergänzend kann die Kamera 5 eine Optik aufweisen, vorzugsweise eine miniaturisierte Optik und insbesondere vorzugsweise eine autofokussierende Optik.

Die Kamera 5 ist mit einer zentralen Steuerungseinheit 9 verbunden. Dabei kann die Kamera 5 einerseits von ihr aufgenommene Bilddaten an die zentrale Steuerungseinheit 9 übermitteln, andererseits kann die zentrale Steuerungseinheit 9 die Funktion der Kamera 5 steuern.

Im dargestellten Beispiel ist die zentrale Steuerungseinheit 9 im Bereich einer Manschette 11 der Handschuh-artigen Vorrichtung 1 angeordnet und die Kamera 5 ist knapp oberhalb, das heißt im Bereich angrenzend an einen Handballen oder ein Handgelenk des Nutzers, angeordnet. Damit behindern die zentrale Steuerungseinheit 9 und die Kamera 5 einerseits kaum eine Bewegung der Hand des Nutzers, andererseits kann die Kamera 5 insbesondere an einer Position angeordnet sein, wo sie beispielsweise nicht von einem Ärmel einer Jacke des Nutzers leicht verdeckt wird.

Um ein Aufnehmen von Bildern mithilfe der Kamera 5 einfach und ergonomisch intuitiv auslösen zu können, ist an der Handschuh-artigen Vorrichtung 1 eine spezielle Schaltanordnung 7 vorgesehen. Diese Schaltanordnung 7 ist derart ausgestaltet, dass der Nutzer durch ein Bewegen seines Daumens 51 hin zu seinem Zeigefinger 53 bzw. dem zugehörigen Fingergelenk 55 eine Art Betätigungsbewegung durchführen kann, aufgrund derer die Schaltanordnung 7 ein Kontaktsignal auslöst, welches wiederum die Kamera 5 dazu veranlasst, ein oder mehrere Bilder aufzunehmen.

Im dargestellten Beispiel ist die Schaltanordnung 7 zweiteilig aufgebaut. Einerseits ist im Bereich angrenzend an den Zeigefinger 53 bzw. Fingergelenk 55 eine zu betätigende Komponente 13 angeordnet. Diese zu betätigende Komponente 13 kann beispielsweise ein schaltbarer Kontakt sein, der bei seiner Betätigung einen Schaltkreis schließt und dadurch das Kontaktsignal auslösen kann. Im Bereich des gegenüberliegenden Daumens 51 der gleichen Hand ist eine Betätigungskomponente 15 vorgesehen, die bei Annähern an die zu betätigende Komponente 13 und insbesondere bei einem mechanischen Kontakt mit dieser die zu betätigende Komponente 13 betätigt. Beispielsweise kann die zu betätigende Komponente 13 ein Reed-Kontakt sein und die Betätigungskomponente 15 kann ein kleiner Magnet sein, der bei Annähern an den Reed-Kontakt den Reed-Kontakt schließt, so dass das Kontaktsignal ausgelöst wird.

In einer alternativen oder ergänzenden Ausgestaltung kann die Schaltanordnung 7 ergänzend eine Sicherungskomponente 14 aufweisen, welche von einem gesicherten Zustand in einen ungesicherten Zustand und umgekehrt überführt werden kann, wobei sie im gesicherten Zustand ein Auslösen des Kontaktsignals verhindert, dieses aber im ungesicherten Zustand zulässt. Eine solche Sicherungskomponente 14 kann auf verschiedene Arten ausgeführt sein. Beispielsweise kann die Sicherungskomponente, wie in Fig. 1 angedeutet, als eine Art ergänzende zu betätigende Komponente vorgesehen sein, welche zeitgleich oder vorangehend zu einer Betätigung der das Kontaktsignal auslösenden zu betätigenden Komponente 13 betätigt werden muss, um tatsächlich das Kontaktsignal auszulösen und damit die Aufnahme eines Bildes durch die Kamera 5 zu triggern.

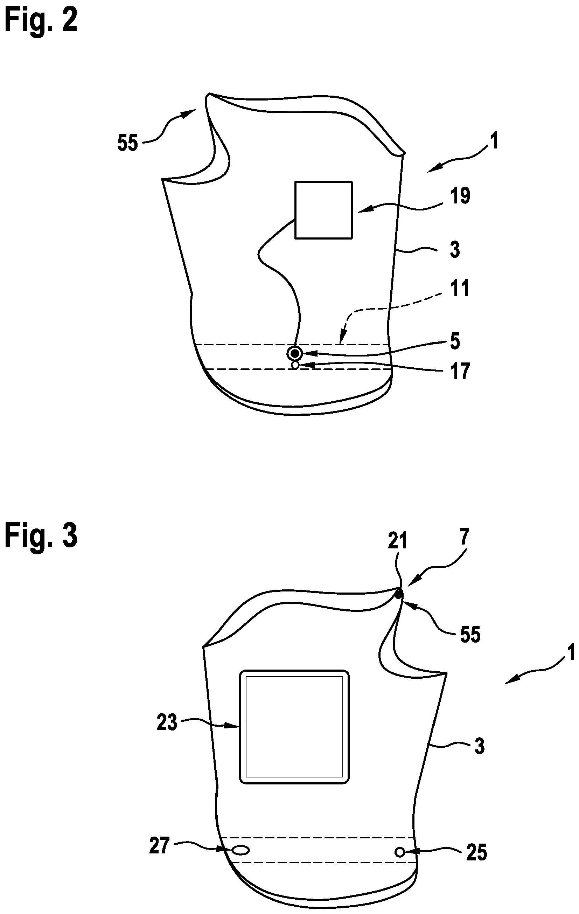

In den Fig. 2 und 3 ist eine Ansicht von unten und eine Ansicht von oben auf eine alternative Ausführungsform einer Handschuh-artigen Vorrichtung 1 dargestellt. In diesem Fall ist die Handschuh-artige Vorrichtung 1 nicht als gesamter Handschuh ausgebildet, sondern lediglich als eine Art Handschuh-Manschette, die in einem über die Hand eines Nutzers gezogenen Zustand lediglich Teile der Hand des Nutzers, insbesondere dessen Handgelenk und einen unteren Bereich der Hand einschließlich des Handballens und eines Zeigefingergelenks 55, umgibt. Eine solche manschettenartige Vorrichtung 1 kann sowohl direkt über die Hand des Nutzers gezogen werden als auch gegebenenfalls über einen diese Hand bereits bedeckenden herkömmlichen Handschuh. Die Trägerstruktur 3 der Handschuh-artigen Vorrichtung 1 ist dabei derart ausgebildet, dass sie ohne weitere Vorkehrungen, das heißt beispielsweise ohne zusätzliche Bänder, Gurte oder Ähnliches, die nicht selbst Teil der Trägerstruktur 3 sind, derart an der Hand bzw. dem Handgelenk des Nutzers befestigt werden kann, dass sie in dem über die Hand gezogenen Zustand die Hand des Nutzers zumindest teilweise umgibt und an dieser gehalten ist.

Wie in Fig. 2 dargestellt, ist an einer Seite der Handschuh-artigen Vorrichtung 1 im Bereich einer das Handgelenk umgebenden Manschette 11 die Kamera 5 vorgesehen. Direkt neben der Kamera 5 kann ein miniaturisiertes Mikrofon 17 angeordnet sein.

Wie in Fig. 3 dargestellt, weist die Trägerstruktur 3 der Handschuh-artigen Vorrichtung 1 an einer entgegengesetzten Oberfläche ein großflächiges und vorzugsweise flexibles Display 23 auf, auf dem unter anderem von der Kamera 5 aufgenommene Bilder dargestellt werden können. Das Display 23 kann vorzugsweise berührungsempfindlich sein, das heißt als sogenannter Touchscreen ausgebildet sein.

Ferner ist an der Trägerstruktur 3 ein eine Status-LED 27 vorgesehen Die Status-LED kann beispielsweise in verschiedenen Farben leuchten und/oder in verschiedenen zeitlichen Mustern an- und ausgehen und auf diese Weise einen aktuellen Status der Kamerafunktion der Handschuh-artigen Vorrichtung 1 visualisieren.

Ergänzend können noch weitere Sensoren wie z.B. ein Näherungssensor 25 vorgesehen sein. Ein solcher Näherungssensor 25 kann nahe Objekte erkennen, ohne dass ein physischer Kontakt bestehen muss. Solche Sensoren können beispielsweise dazu eingesetzt werden, ein Display mit einer Handbewegung an- oder auszuschalten, ohne den Handschuh zu berühren.

Angrenzend an eine Position, in der die Trägerstruktur 3 im auf die Hand des Nutzers aufgezogenen Zustand an den Zeigefinger 53 bzw. den zugehörigen Fingergelenk 55 der Hand angrenzt, ist wiederum eine Schaltanordnung 7 vorgesehen. Im vorliegenden Fall ist die Schaltanordnung als einfacher, durch mechanisches Berühren betätigbarer Schalter oder Taster 21 ausgestaltet. Gegebenenfalls kann ergänzend eine Sicherungskomponente 14 vorgesehen sein, mithilfe derer ein Auslesen des Kontaktsignals durch den Taster 21 so lange unterdrückt werden kann, bis die Sicherungskomponente 14 entsichert wurde.

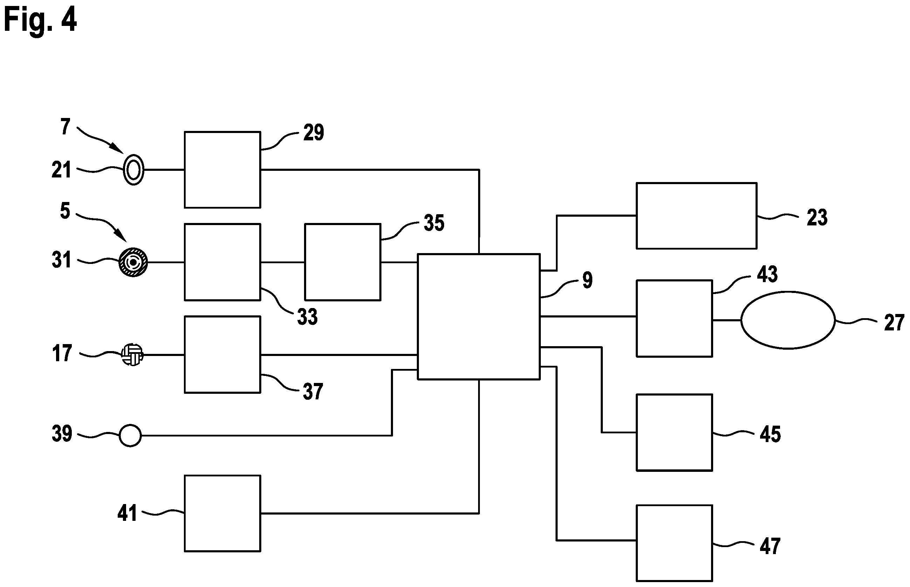

Fig. 4 zeigt eine mögliche Ausführungsform von zur Implementierung der gewünschten Kamerafunktion in der Handschuh-artigen Vorrichtung 1 vorzusehenden elektrischen bzw. elektronischen Komponenten. Viele dieser Komponenten sind lediglich optional und können gegebenenfalls zusätzliche Funktionen für die Handschuh-artige Vorrichtung 1 ermöglichen. Die in Fig. 4 auf der linken Seite dargestellten Komponenten sind dabei Eingabevorrichtungen, wohingegen auf der rechten Seite Ausgabevorrichtungen dargestellt sind.

Zum Auslösen des Kontaktsignals ist die Schaltanordnung 7 mit einem Taster 21 ausgebildet. Ein erzeugtes Schaltsignal wird zunächst von einer Anti-Prell-Anordnung 29 ("debouncer") gefiltert, um sicherzustellen, dass eine einzelne Betätigung der Schaltanordnung 7 auch nur zu einer einzelnen Erzeugung eines Schaltsignals führt. Das Schaltsignal kann dann an die zentrale Steuerungseinheit 9 weitergeleitet werden.

Die zentrale Verarbeitungseinheit 9 kann daraufhin die Kamera 5 dazu veranlassen, ein Bild oder eine Folge von Bildern aufzunehmen. Die Kamera 5 verfügt hierzu über eine Optik 31 und einen Bildsensor 33. Signale des Bildsensors 33 können gegebenenfalls noch einen A/D-Wandler durchlaufen.

Zusätzlich kann ein Mikrofon 17 Audiosignale an die zentrale Steuerungseinheit 9 liefern, gegebenenfalls nachdem diese eine Tonverarbeitungseinheit 37 (Audio CODEC) durchlaufen haben.

Ferner können zusätzliche Sensoren 39 wie zum Beispiel ein Näherungssensor 25 Signale an die zentrale Steuerungseinheit 9 liefern.

Die zentrale Steuerungseinheit 9 kann die von der Schaltanordnung 7, der Kamera 5, dem Mikrofon 17 sowie gegebenenfalls zusätzlichen Sensoren 39 gelieferten Signale verarbeiten und/oder die genannten Komponenten steuern. Hierzu verfügt sie über wenigstens einen datenverarbeitenden Prozessor.

Von der Kamera 5 können aufgenommene Bilder können dann auf dem Display 23 ausgegeben werden. Ein aktueller Zustand der die Kamerafunktion implementierenden Komponenten kann mithilfe einer von einem Treiber 43 angesteuerten Status-LED 27 angezeigt werden.

Ferner kann vorgesehen sein, von der Kamera 5 der Handschuh-artigen Vorrichtung 1 aufgenommene Bilder beispielsweise mithilfe einer Bluetooth-Schnittstelle 45 an andere Geräte wie z.B. ein Mobiltelefon zu übermitteln.

Außerdem kann ein interner Speicher 47 vorgesehen sein, in dem Bilddaten gespeichert werden können.

Die zuvor beschriebenen elektrischen und elektronischen Komponenten können mithilfe einer Batterie 41, vorzugsweise einer Lithium-Ionen-Batterie, mit elektrischer Energie versorgt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

### BEZUGSZEICHENLISTE

- 1: Handschuh-artige Vorrichtung
- 3: Trägerstruktur
- 5: Kamera
- 7: Schaltanordnung
- 9: zentrale Steuerungseinheit
- 11: Manschette
- 13: zu betätigende Komponente
- 14: Sicherungskomponente
- 15: Betätigungskomponente
- 17: Mikrofon
- 19: Display
- 21: Taster
- 23: Display
- 25: Näherungssensor
- 27: Status-LED
- 29: Anti-Prell-Vorrichtung
- 31: Optik
- 33: Bildsensor
- 35: A/D-Wandler
- 37: Tonverarbeitungseinheit
- 39: Sensor
- 41: Batterie
- 43: Treiber
- 45: Bluetooth-Schnittstelle
- 47: interner Speicher
- 51: Daumen
- 53: Zeigefinger
- 55: Zeigefingergelenk

## Patentansprüche

1. Handschuh-artige Vorrichtung (1), aufweisend:
eine Trägerstruktur (3),
eine Kamera (5),
eine Schaltanordnung (7),
wobei die Kamera (5) dazu ausgebildet ist, bei Empfangen eines Kontaktsignals ein Bild oder eine Bildfolge aufzunehmen,
wobei die Trägerstruktur (3) dazu ausgebildet ist, sich ohne weitere Vorkehrungen derart an einer Hand und/oder einem Handgelenk eines Nutzers befestigen zu lassen, dass in einem über die Hand gezogenen Zustand zumindest Teile der Trägerstruktur (3) die Hand des Nutzers umgeben,
wobei die Kamera (5) und die Schaltanordnung (7) an der Trägerstruktur (3) befestigt sind, und
wobei die Schaltanordnung (7) eine zu betätigende Komponente (13) aufweist, die derart angeordnet und ausgelegt ist, dass sie durch eine Betätigungsbewegung eines Daumens (51) des Nutzers hin zu einem Finger (53) der gleichen Hand und/oder hin zu einem Fingergelenk (55) der gleichen Hand betätigt wird und dadurch das Kontaktsignal auslöst und dieses an die Kamera (5) weiterleitet,
**dadurch gekennzeichnet, dass** die Kamera (5) an der Trägerstruktur (3) an einer Stelle angebracht ist, welche in dem über die Hand gezogenen Zustand an dem Handballen und/oder an dem Handgelenk liegt.

2. Handschuh-artige Vorrichtung nach Anspruch 1, wobei die Schaltanordnung (7) eine Sicherungskomponente (14) aufweist, welche in einem gesicherten Zustand das Auslösen des Kontaktsignals verhindert und welche in einen ungesicherten Zustand überführt werden kann, um das Auslösen des Kontaktsignals durch die Betätigungsbewegung zuzulassen.

3. Handschuh-artige Vorrichtung nach Anspruch 1 oder 2, wobei die Schaltanordnung (7) ferner eine Betätigungskomponente (15) aufweist und wobei die Schaltanordnung (7) dazu ausgelegt ist, das Kontaktsignal ausschließlich dann zu erzeugen, wenn die Betätigungskomponente (15) mit der zu betätigenden Komponente (13) in mechanischen Kontakt gebracht wird.

4. Handschuh-artige Vorrichtung nach einem der vorangehenden Ansprüche, wobei die zu betätigende Komponente (13) an der Trägerstruktur (3) an einer Stelle angebracht ist, welche in dem über die Hand gezogenen Zustand an einer dem Daumen (51) gegenüberliegenden Seite des Zeigefingers (53) und/oder des Zeigefingergelenks (55) liegt.

5. Handschuh-artige Vorrichtung nach einem der vorangehenden Ansprüche, wobei die Kamera (5) an der Trägerstruktur (3) an einer Stelle angebracht ist, welche in dem über die Hand gezogenen Zustand an der Handgelenksunterseite liegt.

6. Handschuh-artige Vorrichtung nach einem der vorangehenden Ansprüche, wobei die Schaltanordnung (7) und/oder die Kamera (5) wasserdicht verkapselt ist.

7. Handschuh-artige Vorrichtung nach einem der vorangehenden Ansprüche, wobei die Schaltanordnung (7) ferner eine Anti-Prell-Anordnung (29) aufweist, welche eine Erzeugung mehrerer Schaltsignale durch eine einzelne Betätigungsbewegung unterdrückt.

8. Handschuh-artige Vorrichtung nach einem der vorangehenden Ansprüche, wobei die Trägerstruktur (3) aus einem flexiblen, im Wesentlichen nicht elastisch dehnbaren Material ausgebildet ist.

9. Handschuh-artige Vorrichtung nach einem der vorangehenden Ansprüche, ferner aufweisend ein Display (23), welches an der Trägerstruktur (3) angebracht ist und dazu ausgelegt ist, von der Kamera (5) aufgenommene Bilder darzustellen.

10. Handschuh-artige Vorrichtung nach Anspruch 9, wobei das Display (23) ein flexibles Display ist.

11. Handschuh-artige Vorrichtung nach einem der Ansprüche 9 und 10, wobei das Display (23) an der Trägerstruktur (3) an einer Stelle angebracht ist, welche in dem über die Hand gezogenen Zustand an dem Handrücken liegt.

## Claims

1. Glove-like device (1), comprising:
a carrier structure (3),
a camera (5),
a switching arrangement (7),
wherein the camera (5) is configured to take an image or a sequence of images upon receiving a contact signal,
the carrier structure (3) being configured to be attached without further provisions to a hand and/or a wrist of a user such that, in a state pulled over the hand, at least parts of the carrier structure (3) surround the hand of the user,
the camera (5) and the switching arrangement (7) being attached to the carrier structure (3), and
the switching arrangement (7) comprising a component (13) to be actuated which is arranged and configured such that it is actuated by an actuating movement of a thumb (51) of the user towards a finger (53) of the same hand and/or towards a finger joint (55) of the same hand, thereby triggering the contact signal and forwarding it to the camera (5),
**characterized in that**
the camera (5) being attached to the carrier structure (3) at a position which lies on the palm and/or wrist in the state pulled over the hand..

2. Glove-like device according to claim 1, the switching arrangement (7) comprising a securing component (14) which in a secured state prevents the triggering of the contact signal and which may be converted to an unsecured state to permit the triggering of the contact signal by the actuation movement.

3. Glove-like device according to claim 1 or 2, the switching arrangement (7) further comprising an actuating component (15) and the switching arrangement (7) being configured to generate the contact signal only when the actuating component (15) is brought into mechanical contact with the component (13) to be actuated.

4. Glove-like device according to any of the foregoing claims, the component (13) to be actuated being attached to the carrier structure (3) at a position which, in the state pulled over the hand, lies on a side of the index finger (53) and/or the index finger joint (55) opposite the thumb (51).

5. Glove-like device according to one of the foregoing claims, the camera (5) being attached to the carrier structure (3) at a position which lies on the underside of the wrist in the state pulled over the hand.

6. Glove-like device according to any of the preceding claims, wherein the switching arrangement (7) and/or the camera (5) is encapsulated in a watertight manner.

7. Glove-like device according to any of the foregoing claims, the switching arrangement (7) further comprising an anti-bounce arrangement (29) which suppresses generation of a plurality of switching signals by a single actuation movement.

8. Glove-like device according to any of the foregoing claims, wherein the carrier structure (3) is formed of a flexible, substantially not elastically stretchable material.

9. Glove-like device according to one of the preceding claims, further comprising a display (23) which is attached to the carrier structure (3) and is configured to display images taken by the camera (5).

10. Glove-like device according to claim 9, wherein the display (23) is a flexible display.

11. Glove-like device according to one of claims 9 and 10, wherein the display (23) is attached to the carrier structure (3) at a position which lies on the back of the hand in the state pulled over the hand.

## Revendications

1. Dispositif en forme de gant (1), comportant :
une structure de support (3),
une caméra (5),
un agencement de commutation (7),
la caméra (5) étant réalisée pour capturer une image ou une séquence d'images à la réception d'un signal de contact,
la structure de support (3) étant réalisée de façon à pouvoir être fixée, sans autres dispositions, sur une main et/ou un poignet d'un utilisateur de telle manière que, dans un état enfilé sur la main, au moins des parties de la structure de support (3) entourent la main de l'utilisateur, la caméra (5) et l'agencement de commutation (7) étant fixés à la structure de support (3), et
l'agencement de commutation (7) comportant un composant (13) à actionner, qui est disposé et conçu de telle sorte qu'il est actionné par un mouvement d'actionnement d'un pouce (51) de l'utilisateur en direction d'un doigt (53) de la même main et/ou en direction d'une articulation de doigt (55) de la même main et déclenche ainsi le signal de contact et transmet celui-ci à la caméra (5),
**caractérisé en ce que** la caméra (5) est fixée à la structure de support (3) à un endroit qui, dans l'état enfilé sur la main, se trouve au niveau de la protubérance de la main et/ou du poignet.

2. Dispositif en forme de gant selon la revendication 1, dans lequel l'agencement de commutation (7) comporte un composant de sécurité (14), qui, dans un état sécurisé, empêche le déclenchement du signal de contact et qui peut être mis dans un état non sécurisé pour permettre le déclenchement du signal de contact par le mouvement d'actionnement.

3. Dispositif en forme de gant selon la revendication 1 ou 2, dans lequel l'agencement de commutation (7) comporte en outre un composant d'actionnement (15) et dans lequel l'agencement de commutation (7) est conçu pour générer le signal de contact uniquement quand le composant d'actionnement (15) est amené en contact mécanique avec le composant à actionner (13).

4. Dispositif en forme de gant selon l'une des revendications précédentes, dans lequel le composant à actionner (13) est fixé à la structure de support (3) à un endroit qui, dans l'état enfilé sur la main, se trouve sur un côté de l'index (53) et/ou de l'articulation de l'index (55) situé en face du pouce (51).

5. Dispositif en forme de gant selon l'une des revendications précédentes, dans lequel la caméra (5) est fixée à la structure de support (3) à un endroit qui, dans l'état enfilé sur la main, se trouve sur la face inférieure du poignet.

6. Dispositif en forme de gant selon l'une des revendications précédentes, dans lequel l'agencement de commutation (7) et/ou la caméra (5) sont encapsulés de manière étanche à l'eau.

7. Dispositif en forme de gant selon l'une des revendications précédentes, dans lequel l'agencement de commutation (7) comporte en outre un agencement antibattement (29), qui empêche une génération de plusieurs signaux de commutation par un seul mouvement d'actionnement.

8. Dispositif en forme de gant selon l'une des revendications précédentes, dans lequel la structure de support (3) est réalisée en un matériau flexible, essentiellement non extensible élastiquement.

9. Dispositif en forme de gant selon l'une des revendications précédentes, comportant en outre un écran (23), qui est fixé à la structure de support (3) et qui est conçu pour visualiser des images capturées par la caméra (5).

10. Dispositif en forme de gant selon la revendication 9, dans lequel l'écran (23) est un écran flexible.

11. Dispositif en forme de gant selon l'une des revendications 9 et 10, dans lequel l'écran (23) est fixé à la structure de support (3) à un endroit qui, dans l'état enfilé sur la main, se trouve sur le dos de la main.
